# EUROPEAN PATENT APPLICATION

(11) **EP 1 096 497 A2**
(43) Date of publication of application: **02.05.2001**
(21) Application number: 00123313.9
(22) Date of filing: 26.10.2000
(51) Int. Cl.: G11B 27/10, G11B 19/02, G11B 27/30, G11B 27/32, G11B 27/11

(54) **Recorded information reproducing apparatus**

(30) Priority: 27.10.1999 JP 30530699
(71) Applicant: Pioneer Corporation, Meguro-ku, Tokyo (JP)
(72) Inventor: Matsumoto, Masaaki, Tokorozawa-City, Saitama (JP); Yamaguchi, Akihisa, Tokorozawa-City, Saitama (JP)
(74) Representative: Klingseisen, Franz, Dipl.-Ing.

(57) **Abstract**

A recorded information reproducing apparatus which allows a user to easily perform various kinds of operations without being conscious of the presence of a plurality of skip tracks to be excluded from reproduction targets even if the skip tracks are located on a recording medium. New track numbers are respectively assigned to those tracks which remain as a result of excluding the skip tracks indicated by skip track information from all of the tracks on which information signals are recorded.

## Description

### BACKGROUND OF THE INVENTION

### Field of the Invention

The present invention relates to a recorded information reproducing apparatus which has a track skipping capability.

### Description of the Related Art

Available at present are audio CD-R recorders which can record audio signals carrying musical pieces on a write-once type optical recording medium, such as a CD-R disk, without requiring compression coding.

Data once recorded on a CD-R disk cannot be erased or rewritten. If a recording failure occurs on a track on a CD-R disk, therefore, this failure-occurred track (hereinafter called "recording-failed track") remains as it is. If musical pieces are played back from this CD-R disk using an ordinary CD player, information is undesirably reproduced from this recording-failed track.

As a solution to this shortcoming, a CD player has been developed which has a track skipping capability which automatically inhibits reproduction of information from any recording-failed track on a CD-R disk. To use this track skipping capability, a user should designate each recording-failed track as a skip track and should write the track number of each recording-failed track in the TOC (Table Of Contents) area of the CD-R disk beforehand using a CD-R recorder. At the time of continuously playing back a plurality of musical pieces recorded on such a CD-R disk, the CD player that has a track skipping capability acquires the skip track numbers from the TOC area first, and sequentially plays back the individual musical pieces while skipping the tracks that are indicated by the skip track numbers.

As a track number is assigned to each skip track, in the case of executing so-called search playback which seeks the top of a desired musical piece based on its track number designated, for example, a user should perform some operation to designate the track number in consideration of those tracks which have been designated as skip tracks.

Suppose that musical pieces A and B have successfully been recorded on a track 1 and a track 2 respectively but recording a musical piece C on a track 3 has failed, so that this musical piece C has been recorded again on a track 4, and a musical piece D has finally been recorded on a track 5. In this case, a CD-R recorder writes the track number "3" in the TOC area as the aforementioned skip track. When a CD player having a track skipping capability is used to reproduce the musical pieces from this CD-R disk, the musical pieces are played back in the order of the musical piece A as the first musical piece, the musical piece B as the second musical piece, the musical piece C as the third musical piece and the musical piece D as the fourth musical piece.

To search for the musical piece B and play it back in this case, the user should designate "2" as the track number of the track where this musical piece B is recorded. This order is the same as the aforementioned order of playing back the musical piece B.

If the user wants to search for the musical piece D and play it back, the user should designate "5" as the track number although the musical piece D is to be reproduced fourth.

### OBJECTS AND SUMMARY OF THE INVENTION

Accordingly, it is an object of the present invention to provide a recorded information reproducing apparatus which allows a user to easily perform various kinds of operations without being conscious of the existence of a plurality of skip tracks that should be excluded from reproduction targets even if the skip tracks exist on a recording medium.

A recorded information reproducing apparatus according to this invention, which reproduces recorded information from a recording medium where information signals are respectively recorded on a plurality of tracks and skip track information indicating tracks to be excluded from reproduction targets is recorded, comprises means for reproducing the skip track information from the recording medium; and track number generating means for respectively assigning new track numbers to a group of tracks, said group of tracks resulting from excluding the tracks indicated by the skip track information from all of the tracks on which the information signals are recorded.

### BRIEF DESCRIPTION OF THE DRAWINGS

Figure 1 is a diagram showing the schematic structure of a recorded information reproducing apparatus according to this invention;
Figure 2 is a flowchart illustrating a sub routine for generating skip track information;
Figure 3 is a diagram showing a skip track memory area in a RAM 34;
Figure 4 is a flowchart illustrating a sub routine for displaying a track number;
Figure 5 is a flowchart illustrating a sub routine for playing back a skip track; and
Figure 6 is a flowchart illustrating a search playback sub routine.

### DETAILED DESCRIPTION OF THE PREFERRED EMBODIMENTS

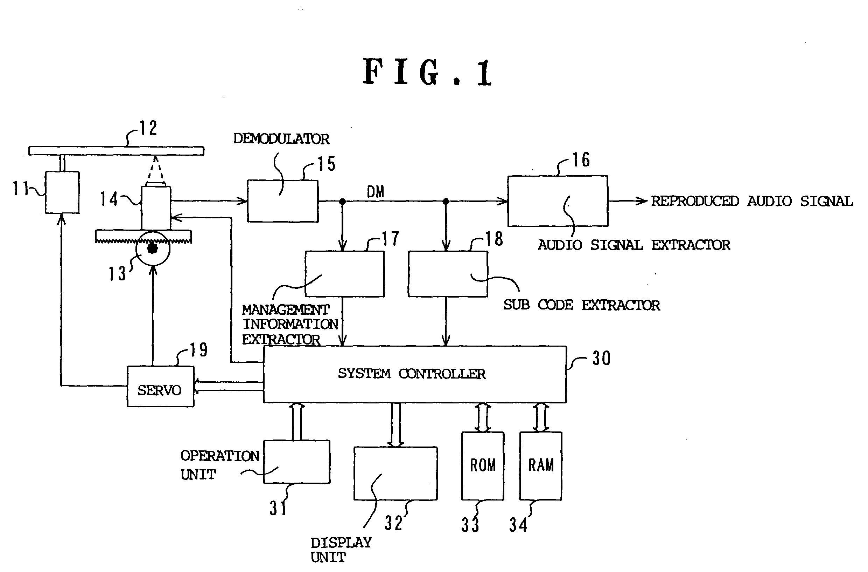

Figure 1 is a diagram showing the schematic structure of a recorded information reproducing apparatus embodying this invention.

In Figure 1, a recording disk 12, which is a write-once type optical recording medium, such as a CD-R disk, is turned by a spindle motor 11. The recording disk 12 has a recording surface which is separated into a program area where audio signals corresponding to individual musical pieces are recorded in a modulated form and a TOC area where various kinds of management information are recorded in a modulated form. When tracks which are to be excluded from reproduction targets (such a track will hereinafter be called "skip track") is designated, the track numbers that indicate the skip tracks are described in the management information. A slider mechanism 13 moves a pickup 14 in the radial direction of the recording disk 12. In response to a read start instruction supplied from a system controller 30, the pickup 14 irradiates a read beam on the recording surface of the recording disk 12 and performs photoelectric conversion on the reflected light, thus yielding a read signal. In response to a read stop instruction supplied from the system controller 30, the pickup 14 stops this information reading operation. A demodulator 15 digitizes the read signal sent from the pickup 14 to a binary signal. The demodulator 15 EFM demodulates on the binary signal, thereby yielding a demodulated digital signal DM. The demodulator 15 supplies the demodulated digital signal DM to an audio signal extractor 16, a management information extractor 17 and a sub code extractor 18. The audio signal extractor 16 extracts audio signals from the demodulated digital signal DM and outputs the signals as reproduced audio signals. The management information extractor 17 extracts the aforementioned management information from the demodulated digital signal DM and sends the information to the system controller 30. The sub code extractor 18 extracts the sub codes from the demodulated digital signal DM and sends the sub codes to the system controller 30. A servo circuit 19 generates a spindle-motor drive voltage corresponding to a spindle motor turning control signal supplied from the system controller 30. The servo circuit 19 applies the spindle-motor drive voltage to the spindle motor 11. The servo circuit 19 generates a slider drive voltage corresponding to a slider control signal supplied from the system control circuit 30. The servo circuit 19 applies the slider drive voltage to the slider mechanism 13. An operation unit 31 generates various instruction signals associated with operations of a disk player, such as a playback operation, a playback stop operation and a track-number designating operation, which are performed by a user, and sends those instruction signals to the system controller 30.

A display unit 32 displays various kinds of information, such as the total number of musical pieces stored on the recording disk 12, the total time of the musical pieces, the track number of a musical piece which is being currently played and the progressing time of the currently-played musical piece, based on various display instructions supplied from the system controller 30.

Software which controls the operation of this recorded information reproducing apparatus has been stored in a ROM (Read Only Memory) 33 beforehand. In accordance with this software, the system controller 30 executes various operational controls which will be discussed below.

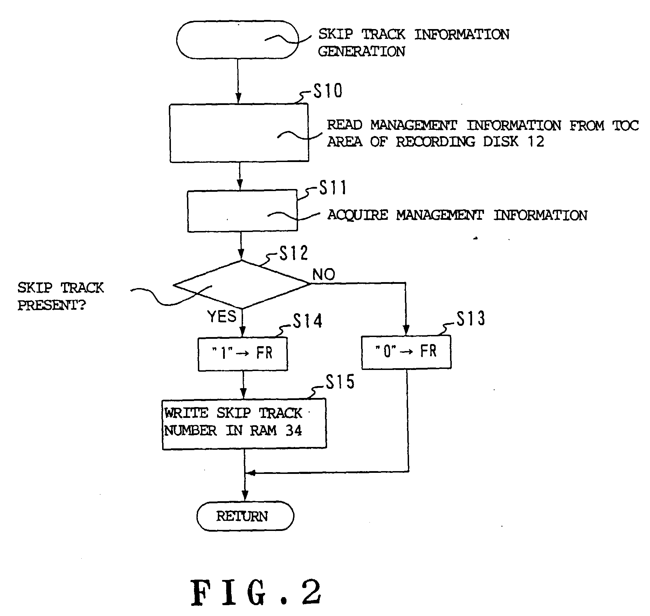

When the recording disk 12 is loaded into the recorded information reproducing apparatus, the system controller 30 executes a sub routine for generating skip track information as shown in Figure 2.

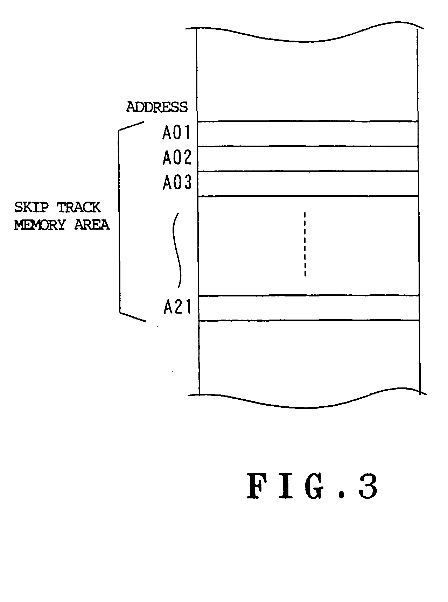

In Figure 2, first, the system controller 30 supplies the slider control signal to the servo circuit 19 to cause the pickup 14 to read management information from the TOC area of the recording disk 12, and supplies a read start instruction to the pickup 14 (step S10). As the process of step S10 is executed, the pickup 14 reads management information from the TOC area of the recording disk 12. At this time, the management information extractor 17 extracts the management information from the demodulated digital signal DM and sends the management information to the system controller 30. Then, the system controller 30 acquires the management information supplied from the management information extractor 17 (step S11), and determines if any track number indicating a skip track is described in this management information (step S12). When no skip track number is described in the management information in step S12, the system controller 30 writes a logic level "0" in a flag register FR (not shown) (step S13). When a skip track number is described in the management information, on the other hand, the system controller 30 writes a logic level "1" in the flag register FR (step S14). After executing this step S14, the system controller 30 writes the skip track numbers indicating the skip tracks at the respective addresses (addresses "A01" to "A21") in a skip track memory area in the RAM 34 as shown in Figure 3 (step S15). After executing this step S15 or the aforementioned step S13, the system controller 30 leaves this skip-track-information generating sub routine and returns to a main routine (which will not be discussed in this specification).

As the skip-track-information generating sub routine is executed, the flag that indicates whether or not any skip track exists on the recording disk 12 is written in the flag register FR. When skip tracks are present, the track numbers of the skip tracks are stored at the respective addresses in the skip track memory area in the RAM 34 as shown in Figure 3.

When the user performs a playback instructing operation using the operation unit 31 during execution of the main routine, the system controller 30 sends the slider control signal and the read start instruction respectively to the servo circuit 19 and the pickup 14 in order to continuously play back the individual musical pieces recorded on the recording disk 12, in order, from the track number 1. In accordance with this control, the pickup 14 reads audio signals from the top of the program area of the recording disk 12. Accordingly, the audio signal extractor 16 outputs reproduced audio signals, musical piece by musical piece, in order from the one corresponding to the first musical piece.

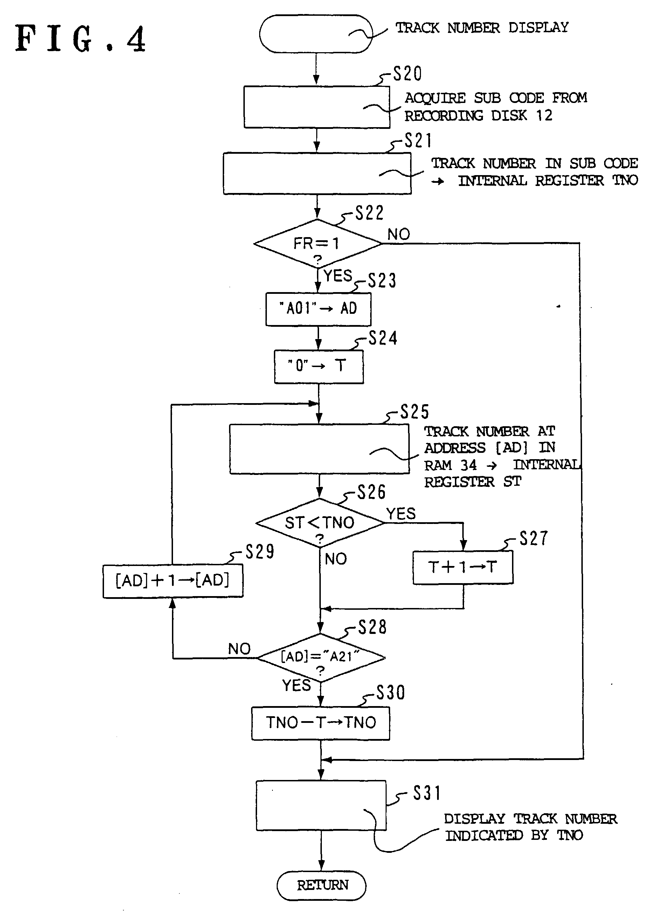

During this playback operation, the system controller 30 executes a sub routine for displaying a track number as shown in Figure 4 every predetermined interval.

In Figure 4, first, the system controller 30 acquires a sub code supplied from the sub code extractor 18 (step S20). Next, the system controller 30 extracts a track number indicating a currently played track and stores this track number in an internal register TNO (not shown) (step S21). Subsequently, the system controller 30 determines if the value stored in the flag register FR that is set by the execution of the skip-track-information generating sub routine is the logic level "1" (step S22). When having determined in step S22 that the storage content of the flag register FR is the logic level "1" or when having determined that there is a skip track in the recording disk 12, the system controller 30 stores "A01" in an address register AD (not shown) as the initial address in the skip track memory area in the RAM 34 as shown in Figure 3 (step S23). Then, the system controller 30 stores "0" in an internal register T (not shown) as the initial value for the number of skip tracks (step S24). The system controller 30 then reads the track number stored at an address [AD] in the skip track memory area in the RAM 34 as shown in Figure 3 and stores it in an internal register ST (not shown) (step S25). The symbol [AD] is the address that is stored in the address register AD. Then, the system controller 30 determines if the track number stored in the internal register ST or the track number of a skip track is smaller than the track number stored in the internal register TNO, i.e., the track number of the currently played track (step S26). When having determined in step S26 that the skip track number is smaller than the track number of the currently played track, the system controller 30 adds "1" to the number of skip tracks or the skip track quantity stored in the internal register T and rewrites the memory content of the internal register T to the resultant value as a new skip track quantity (step S27). After this step S27 is executed or when it is determined in step S26 that the skip track number is not smaller than the track number of the currently played track, the system controller 30 then determines whether or not the address stored in the address register AD coincides with the last address "A21" in the skip track memory area in the RAM 34 as shown in Figure 3 (step S28). When it is not determined in step S28 that the address stored in the address register AD is identical to the last address "A21", the system controller 30 adds "1" to the address stored in the address register AD and rewrites the memory content of the address register AD to a new address acquired by the addition (step S29). After executing this step S29, the system controller 30 returns to the aforementioned step S25 and thereafter repeats the above-described operation. When having determined in step S28 that the address stored in the address register AD is identical to the last address "A21", the system controller 30 subtracts the skip track quantity stored in the internal register T from the track number stored in the internal register TNO and rewrites the memory content of the internal register TNO to the resultant value as a new skip track number (step S30). After this step S30 is executed or when it is determined in the aforementioned step S22 that the memory content of the flag register FR is not the logic level "1", i.e., when it is determined that there is not skip track on the recording disk 12, the system controller 30 sends a track-number display instruction to the display unit 32 to display the track number stored in the internal register TNO (step S31). As a result of executing the step S31, the display unit 32 displays the track number stored in the internal register TNO as the track number for the currently played musical piece.

In short, in the track-number display sub routine, when skip tracks exist on the recording disk 12, the total number of skip tracks having track numbers smaller than the track number of the currently played track that has been acquired from the sub code is counted (step S27). Then, the total number of skip tracks is subtracted from the track number of the currently played track, thus yielding a new track number (step S30), and this new track number is displayed on the display unit 32 (step S31).

In other words, new track numbers are respectively assigned to those tracks which result from exclusion of skip tracks from all the tracks where audio signals are recorded. The track number display is carried out based on the new track numbers.

Even if a plurality of skip tracks that will not become reproduction target exist on the recording disk 12, therefore, track numbers are displayed in the sequence of the musical pieces that are actually played continuously.

Although the display unit 32 has a function of automatically displaying the total number of musical pieces stored on the recording disk 12, the total time of the musical pieces and so forth in addition to the above-described function of displaying the track number of the currently played track, the total number of the musical pieces and the total time of the musical pieces which are to be displayed exclude those of the skip tracks. That is, the display unit 32 displays the total number of tracks in a group of tracks resulting from the exclusion of the skip tracks from the entire tracks where audio signals are recorded as the total number of musical pieces and the sum of the playback times of the audio signals recorded on the respective tracks in the track group as the total time of musical pieces.

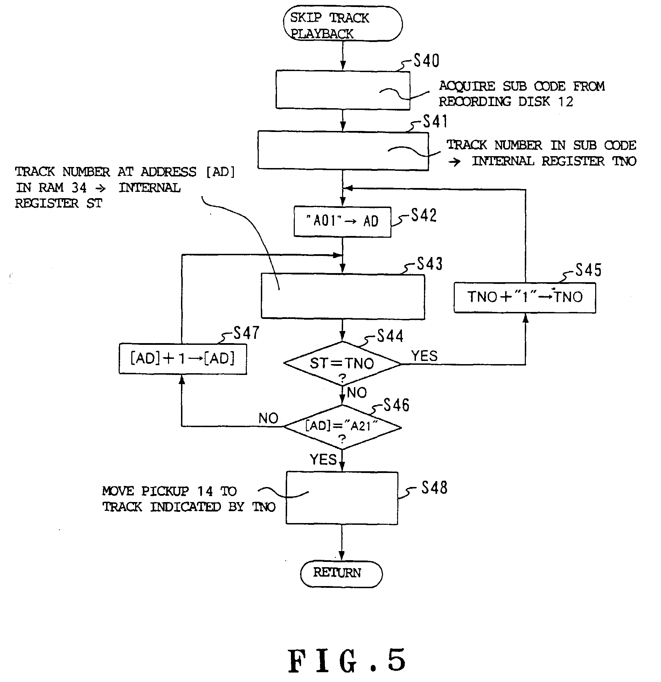

During this playback operation, the system controller 30 repeatedly executes a sub routine for playing back a skip track as shown in Figure 5 together with the above-described track-number display sub routine every predetermined interval.

In Figure 5, the system controller 30 acquires a sub code supplied from the sub code extractor 18 (step S40). The system controller 30 extracts a track number indicating a currently played track from the sub code and stores this track number in the internal register TNO (step S41). Then, the system controller 30 stores "A01" in the address register AD as the initial address in the skip track memory area in the RAM 34 as shown in Figure 3 (step S42). The system controller 30 reads the skip track number stored at the address [AD] in the skip track memory area in the RAM 34 as shown in Figure 3 and stores it in the internal register ST (step S43). [AD] is the address that is stored in the address register AD. The system controller 30 determines if the track number of a skip track stored in the internal register ST is identical to the track number stored in the internal register TNO (step S44). When having determined in step S44 that the skip track number stored in the internal register ST is identical to the track number stored in the internal register TNO, the system controller 30 adds "1" to the skip track number stored in the internal register TNO and rewrites the memory content of the internal register TNO to a new track number acquired by the addition (step S45). After this step S45 is executed, the system controller 30 returns to the aforementioned step S42 and thereafter repeats the above-described operation. When it is not determined in step S44 that the skip track number stored in the internal register ST is identical to the track number stored in the internal register TNO, the system controller 30 determines whether or not the address stored in the address register AD coincides with the last address "A21" in the skip track memory area in the RAM 34 as shown in Figure 3 (step S46). When having determined in step S46 that the address stored in the address register AD is not identical to the last address "A21", the system controller 30 adds "1" to the address stored in the address register AD and rewrites the memory content of the address register AD to a new address acquired by the addition (step S47). After executing this step S47, the system controller 30 returns to the aforementioned step S43 and thereafter repeats the above-described operation. When having determined in step S46 that the address stored in the address register AD is identical to the last address "A21", the system controller 30 sends the slider control signal to the servo circuit 19 to move the pickup 14 to the position indicated by the track number stored in the internal register TNO (step S48) As a result of executing the step S48, the pickup 14 is moved to the head position of the track indicated by the track number stored in the internal register TNO and restarts reading recorded information from there. After executing this step S48, the system controller 30 leaves this skip-track playback sub routine and returns to the main routine.

In short, in the skip-track playback sub routine, when a track to be played back is a track which has been designated as a skip track, the pickup 14 is forcibly moved to the next track other than any skip track and resumes the playback operation from there. Even if a plurality of recording-failed tracks exist on the recording disk 12, therefore, the musical pieces are played as if the recording-failed tracks never existed.

When the new track number written in the internal register TNO through the execution of the step S47 exceeds the total number of musical pieces stored on the recording disk 12, the playback operation is forcibly stopped.

If the reading position of the pickup 14 comes over a skip track while playing back an audio signal from a track other than a skip track due to a scratch on the recording surface of the recording disk 12, vibration or the like, the following control will be executed. When the track number of the currently played track that has been read from the recording disk 12 becomes equal to the track number of a skip track, the playback operation is forcibly stopped during which time the display unit 32 makes predetermined image display like "Skip Track".

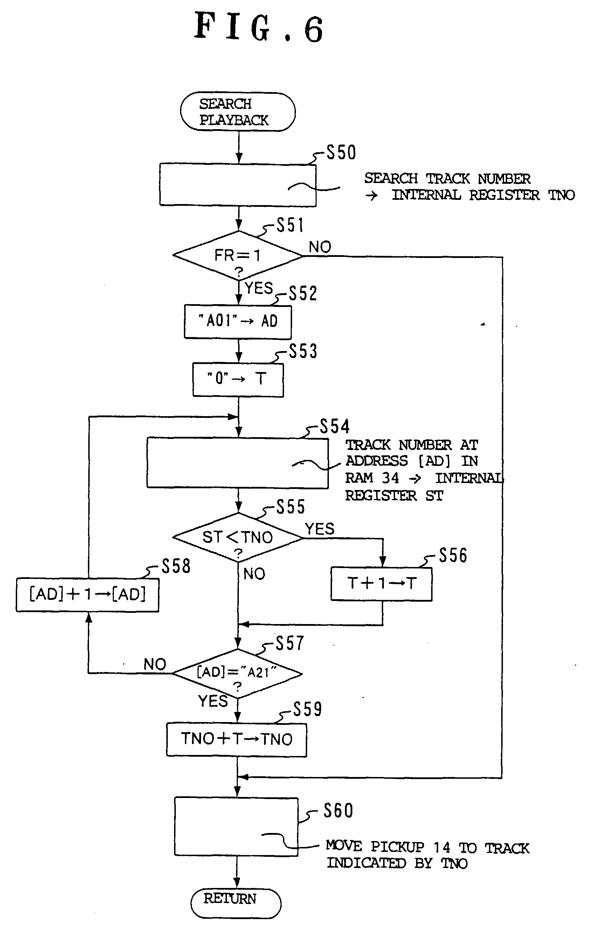

When the user operates the operation unit 31 to perform a search playback operation of consecutively executing a track number designating operation and a playback instructing operation, the operation unit 31 sends a search track number specified by the track number designating operation to the system controller 30. In response to the search track number, the system controller 30 executes a search playback sub routine as shown in Figure 6.

In Figure 6, first, the system controller 30 acquires a search track number supplied from the operation unit 31 and stores it in the internal register TNO (step S50). The system controller 30 determines if the value stored in the flag register FR that is set by the execution of the skip-track-information generating sub routine is the logic level "1" (step S51). When having determined in step S51 that the storage content of the flag register FR is the logic level "1" or when having determined that there is a skip track in the recording disk 12, the system controller 30 stores "A01" in the address register AD as the initial address in the skip track memory area in the RAM 34 as shown in Figure 3 (step S52). Then, the system controller 30 stores "0" in the internal register T as the initial value for the number of skip tracks (step S53). The system controller 30 reads the track number stored at an address [AD] in the skip track memory area in the RAM 34 as shown in Figure 3 and stores it in the internal register ST (step S54). [AD] is the address that is stored in the address register AD. Then, the system controller 30 determines if the track number stored in the internal register ST or the track number of a skip track is smaller than the track number stored in the internal register TNO, i.e., the track number of the currently played track (step S55). When having determined in step S55 that the skip track number is smaller than the track number of the currently played track, the system controller 30 adds "1" to the number of skip tracks or the skip track quantity stored in the internal register T and rewrites the memory content of the internal register T to the resultant value as a new skip track quantity (step S56). After this step S56 is executed or when it is determined in step S55 that the skip track number is not smaller than the track number of the currently played track, the system controller 30 then determines whether or not the address stored in the address register AD coincides with the last address "A21" in the skip track memory area in the RAM 34 as shown in Figure 3 (step S57). When it is not determined in step S57 that the address stored in the address register AD is identical to the last address "A21", the system controller 30 adds "1" to the address stored in the address register AD and rewrites the memory content of the address register AD to a new address acquired by the addition (step S58). After executing this step S58, the system controller 30 returns to the aforementioned step S54 and thereafter repeats the above-described operation. When having determined in step S57 that the address stored in the address register AD is identical to the last address "A21", the system controller 30 adds the skip track quantity stored in the internal register T to the track number stored in the internal register TNO and rewrites the memory content of the internal register TNO to the resultant value as a new track number (step S59). After this step S59 is executed or when it is determined in the aforementioned step S51 that the memory content of the flag register FR is not the logic level "1", i.e., when it is determined that there is not skip track on the recording disk 12, the system controller 30 sends the slider control signal to the servo circuit 19 to move the pickup 14 to the position indicated by the track number stored in the internal register TNO (step S60). As a result of executing the step S60, the pickup 14 is moved to the head position of the track indicated by the track number that has been specified by the user and restarts reading recorded information from there. After executing this step S60, the system controller 30 leaves this skip-track playback sub routine and returns to the main routine.

In short, in the search playback sub routine, when skip tracks exist on the recording disk 12, the total number of skip tracks having track numbers smaller than the track number that has been specified by the user is counted (step S56). Then, the total number of skip tracks is added to the track number specified by the user, thus yielding a new track number for the search target (step S59), and playing back the musical pieces starts from there (step S60).

In other words, new track numbers are respectively assigned to those tracks which result from exclusion of skip tracks from all the tracks where audio signals are recorded. The search playback is carried out based on the new track numbers. Even if a plurality of skip tracks exist on the recording disk 12, therefore, the number of a desired musical piece in the actual sequence of continuous playback has only to be set as the track number of the track that is designated in the search. This can allow the user to easily perform the search operation without being conscious of the number of skip tracks and the positions of the skip tracks.

In the above-described embodiment, the total number of skip tracks having track numbers smaller than the track number of a currently played track that has been read from the recording disk 12 is counted from time to time (steps S26 and S27 or steps S55 and S56). However, the correlation between the track number of a currently played track and the total number of skip tracks having track numbers smaller than the former track number becomes apparent from the list of the track numbers of skip tracks as shown in Figure 3 which has been obtained as a result of executing the skip-track-information generating sub routine illustrated in Figure 2.

Based on this list of track numbers, therefore, a conversion table which associates each track number with the total number of skip tracks having track numbers smaller than that each track number is prepared beforehand. By using this conversion table, the total number of skip tracks having track numbers smaller than the track number of a currently played track read from the recording disk 12 is acquired directly and is stored in the internal register T. Then, the flow goes to the process of step S30 (or S59). In other words, the recorded information reproducing apparatus needs to have such a structure as to be able to assign new track numbers to a group of tracks which result from exclusion of skip tracks from all the tracks where audio signals are recorded.

Although the foregoing description of the embodiment has been given of a recorded information reproducing apparatus, as one example, which reproduces recorded information from the recording disk 12 as a write-once type optical recording medium, such as a CD-R disk, this invention is not limited to this particular type. This invention can be adapted to any recorded information reproducing apparatus as long as the apparatus can reproduce recorded information from a recording medium which is so designed as to be able to specify recorded information that should be excluded from reproduction targets.

According to this invention, as described in detail above, a user can easily perform various kinds of operations without being conscious of the existence of a plurality of skip tracks that should be excluded from reproduction targets even if the skip tracks exist on a recording medium.

## Claims

1. A recorded information reproducing apparatus for reproducing recorded information from a recording medium where information signals are respectively recorded on a plurality of tracks and skip track information indicating tracks to be excluded from reproduction targets is recorded, comprising:
means for reproducing said skip track information from said recording medium; and
track number generating means for respectively assigning new track numbers to a group of tracks, said group of tracks resulting from excluding said tracks indicated by said skip track information from all of said tracks on which said information signals are recorded.

2. A recorded information reproducing apparatus for reproducing recorded information from a recording disk where audio signals corresponding to musical pieces are respectively recorded on a plurality of tracks and skip track information indicating tracks to be excluded from reproduction targets is recorded, comprising:
means for reproducing said skip track information from said recording disk; and
track number generating means for respectively assigning new track numbers to a group of tracks, said group of tracks resulting from excluding said tracks indicated by said skip track information from all of said tracks on which said audio signals are recorded.

3. A recorded information reproducing apparatus for reproducing recorded information from a recording medium where information signals are respectively recorded on a plurality of tracks distinguished by track numbers and skip track information indicating tracks to be excluded from reproduction targets is recorded, comprising:
means for reproducing said skip track information from said recording medium;
track number generating means for respectively assigning new track numbers to a group of tracks, said group of tracks resulting from excluding said tracks indicated by said skip track information from all of said tracks on which said information signals are recorded; and
skip track reproducing means for, in response to a reproduction instruction for a desired track number, reproducing said information signal from a track corresponding to a new track number which is identical to said desired track number.

4. A recorded information reproducing apparatus for reproducing recorded information from a recording disk where audio signals are respectively recorded on a plurality of tracks distinguished by track numbers and skip track information indicating tracks to be excluded from reproduction targets is recorded, comprising:
means for reproducing said skip track information from said recording disk;
track number generating means for respectively assigning new track numbers to a group of tracks, said group of tracks resulting from excluding said tracks indicated by said skip track information from all of said tracks on which said audio signals are recorded; and
skip track reproducing means for, in response to a reproduction instruction for a desired track number, reproducing an audio signal from a track corresponding to a new track number which is identical to said desired track number.

5. The recorded information reproducing apparatus according to any one of claims 1 to 4, further comprising display means for displaying a track number based on said new track numbers.

6. The recorded information reproducing apparatus according to any one of claims 1 to 5, wherein said display means displays a total number of tracks in said group of tracks as a total number of musical pieces and a sum of reproduction times of said information signals respectively recorded on said tracks in said group of tracks as a total music time.

7. The recorded information reproducing apparatus according to any one of claims 1 to 6, further comprising a pickup for reading recorded information from said recording medium; and
wherein when said pickup is moved onto any track indicated by said skip track information while reading recorded information from one of said group of tracks, said display means displays a predetermined image instead of said track number display.
